# EUROPÄISCHE PATENTANMELDUNG

(11) **EP 3 483 682 A1**
(43) Veröffentlichungstag der Anmeldung: **15.05.2019**
(21) Anmeldenummer: 17200811.2
(22) Anmeldetag: 09.11.2017
(51) Int. Cl.: G05B 19/418

(54) **AUTOMATISIERTE ERSTELLUNG VON ANLAGENDOKUMENTATIONEN**

(71) Anmelder: Siemens Aktiengesellschaft, 80333 München (DE)
(72) Erfinder: Geiger, Andreas, 76761 Rülzheim (DE); Wendelberger, Klaus, 68789 St. Leon-Rot (DE)

(57) **Zusammenfassung**

Vorgeschlagen wird ein Verfahren zur Erfassung einer technischen Konfiguration einer industriellen Anlage, insbesondere Fertigungs- oder Produktionsanlage, umfassend: Optische Erfassung wenigstens einer Teilmenge von Komponenten der industriellen Anlage, vorzugsweise im Wesentlichen aller Komponenten der industriellen Anlage, mittels eines zur Erfassung von optischen Informationen ausgebildeten und vorgesehenen Sensors (2), vorzugsweise mittels einer Digitalkamera (6); eine Verwendung der zuvor erfassten optischen Informationen zur automatischen Identifizierung von Komponenten der industriellen Anlage; eine automatische Erstellung einer Konfigurationsdokumentation (19, 24), die die zuvor identifizierten Komponenten der industriellen Anlage umfasst.

## Beschreibung

Die Erfindung betrifft ein Verfahren zur Erfassung einer technischen Konfiguration einer industriellen Anlage, insbesondere Fertigungs- oder Produktionsanlage nach Anspruch 1. Außerdem betrifft die Erfindung ein dazugehöriges Dokumentationssystem nach Anspruch 12.

Im Bereich der Anlagenautomatisierung und/oder -elektrifizierung kann ein Engineering nur erfolgen, wenn Informationen über die zu automatisierende bzw. zu elektrifizierende Anlage verfügbar sind. Unter anderem wird hierfür ein Rohrleitungs- und Instrumentenfließschema (im Folgenden kurz: R&I-Schema) benötigt, in welchem der verfahrenstechnische Aufbau der Anlage mit ihren Komponenten und Verbindungen grafisch abgebildet ist. Zudem sind weitere Informationen wie eine Übersicht über alle Sensoren und Antriebe mit den dazugehörigen Parameterwerten sowie über alle Signale der Anlage von großer Bedeutung für ein solches Engineering.

Aktuelle Systeme zur Anlagenplanung, wie beispielsweise das System COMOS® der Siemens AG, verbinden die grafische Rohrleitungsplanung mit Daten der Komponenten der industriellen Anlage. Dabei stellt jede im R&I-Schema gezeigte Komponente ein Objekt in einer Datenbank von COMOS® dar, das mit entsprechenden Parameterinformationen versehen ist. Das COMOS®-System kann bei Bedarf die für das Engineering benötigten Daten ausgeben und einem Nutzer visualisieren.

Im Falle eines Neubaus einer industriellen Anlage (man spricht hier von einem "Greenfield") werden die für das Engineering der Anlagenautomatisierung und/oder -elektrifizierung benötigten Daten und Unterlagen vom Planer bzw. Hersteller der Anlage zur Verfügung gestellt. Unter Umständen gehören dabei Komponenten der Anlage wie beispielsweise Feldgeräte und dazugehörige Verbindungen zum Lieferumfang des Automatisierungs-/Elektrifizierungsunternehmens, so dass diese Unternehmen die zu den Komponenten/Verbindungen gehörigen Informationen/Daten bereits zur Verfügung haben.

Anders verhält es sich jedoch bei Vorhaben zur Modernisierung industrieller Anlagen (man spricht hier von einem "Brownfield"). Hier werden bestehende Anlagen mit neuer Automatisierungstechnik und/oder neuen Lösungen zur Elektrifizierung umgerüstet. Regelmäßig stehen hierbei notwendige Informationen nicht oder nicht in ausreichendem Maße zur Verfügung. Beispielsweise kann dieser Umstand seine Ursache darin haben, dass eine industrielle Anlage im Laufe ihres Lebens mehrfach umgerüstet wurde und die Umrüstmaßnahmen nicht oder nicht ausreichend dokumentiert wurden.

Liegt eine solche mangelhafte Anlagendokumentation vor, so muss eine Aufnahme der Anlage erfolgen. Im Rahmen dieser Anlagenaufnahme müssen die benötigten Informationen/Daten an dem Ort der Anlage ermittelt werden. Dabei müssen die Informationen/Daten in eine digitalisierte Form gebracht werden, damit sie entsprechend dargestellt und verarbeitet werden können. Man spricht in diesem Zusammenhang auch von der Erstellung eines digitalen Zwillings, der als Basis für das Engineering der Automatisierung bzw. Elektrifizierung der industriellen Anlage dient.

Im Rahmen der Aufnahme der Anlage müssen in der Anlage enthaltene Komponenten und ihre verfahrenstechnischen Verbindungen erfasst werden. Dazu zählen auch die in der Anlage enthaltene Feldgeräte (wie beispielsweise Sensoren und Aktoren) und elektrische Komponenten wie Schaltanlagen, Umrichter oder Transformatoren. Von allen Komponenten und Verbindungen sind die verfügbaren Informationen zu ermitteln. Hierzu zählen beispielsweise Kennzeichen (Name), Hersteller und Typ sowie Parameter wie Durchflussrate, Leistung oder Messbereiche.

Die Informationen können teilweise durch Ablesen von an den Komponenten oder Verbindungen angebrachten Typschildern gewonnen werden. Teilweise ist es auch notwendig, Informationen von bekannten Komponenten/Verbindungen aus weiteren Quellen wie dem Internet bereitzustellen. Die Aufnahme der Anlage erfolgt dabei bislang manuell, beispielsweise durch einen Fachmann, der die industrielle Anlage abläuft und alle benötigten Informationen händisch zusammenträgt. Im Falle eines Brownfields kann er dabei auf bereits vorhandene, ältere Unterlagen zurückgreifen, muss diese aber gegebenenfalls korrigieren.

Die manuelle Aufnahme einer industriellen Anlage bzw. die Erstellung des digitalen Zwillings ist sehr zeitaufwändig, da bei großen industriellen Anlagen zahlreiche Informationen ermittelt und verifiziert werden müssen. Darüber hinaus läuft eine händische Bereitstellung von Informationen mittels des Internets nur mühsam und langsam ab. Dementsprechend verursacht eine Aufnahme einer industriellen Anlage bislang vergleichsweise hohe Kosten. Zudem ist die händische Erstellung des digitalen Zwillings fehleranfällig und erfordert eine hohe Redundanz bei der Aufnahme, um eine hinreichende Genauigkeit der Aufnahme zu gewährleisten.

Der Erfindung liegt die Aufgabe zugrunde, ein Verfahren zur Erfassung einer technischen Konfiguration einer industriellen Anlage, insbesondere Fertigungs- oder Produktionsanlage, anzugeben, das weitgehend automatisiert abläuft und den Aufwand, der für die Erfassung und die Erstellung eines digitalen Zwillings einhergeht, gegenüber den bislang bekannten Verfahren deutlich reduziert.

Diese Aufgabe wird gelöst durch ein Verfahren zur Erfassung einer technischen Konfiguration einer industriellen Anlage, insbesondere Fertigungs- oder Produktionsanlage nach Anspruch 1 und durch ein dazugehöriges Dokumentationssystem zur Erfassung einer technischen Konfiguration einer industriellen Anlage nach Anspruch 12. Vorteilhafte Weiterbildungen ergeben sich aus den abhängigen Ansprüchen.

Bei einem Verfahren zur Erfassung einer technischen Konfiguration einer industriellen Anlage der eingangs beschriebenen Art wird die Aufgabe erfindungsgemäß durch die folgenden Verfahrensschritte gelöst:
a) Optische Erfassung wenigstens einer Teilmenge von Komponenten der industriellen Anlage, vorzugsweise im Wesentlichen aller Komponenten der industriellen Anlage, mittels eines zur Erfassung von optischen Informationen ausgebildeten und vorgesehenen Sensors, vorzugsweise mittels einer Digitalkamera;
b) Verwendung der zuvor erfassten optischen Informationen zur automatischen Identifizierung von Komponenten der industriellen Anlage;
c) Automatische Erstellung einer Konfigurationsdokumentation, die die zuvor identifizierten Komponenten der industriellen Anlage umfasst.

Das erfindungsgemäße Verfahren ermöglicht es, eine Aufnahme einer bestehenden oder neu installierten industriellen Anlage zu automatisieren. In einem ersten Verfahrensschritt werden hierzu Teilbereiche oder die gesamte industrielle Anlage mittels eines geeigneten Sensors optisch erfasst. Unter dem Begriff Sensor wird in diesem Kontext ein Gerät verstanden, dass entweder aktiv elektromagnetische Strahlung emittiert und deren von der Umgebung reflektierten Teil messtechnisch erfasst oder passiv Strahlung der Umgebung detektiert. Die elektromagnetische Strahlung kann dabei für den Menschen sichtbar sein (Licht) oder beispielsweise in einem ultravioletten oder infraroten Wellenlängenbereich liegen.

Der Sensor ist dazu ausgebildet, mehrdimensionale Informationen seiner Umgebung zu erfassen. Dazu kann er beispielsweise über einen Laserscanner verfügen, der nach Art einer Matrix die Umgebung mittels eines Laserstrahls und der entsprechenden Reflexionen auf Gegenständen der Umgebung rastert und Informationen wie Farben von Gegenständen und Abstände zum Sensor erfassen kann.

Es kann sich bei dem erfindungsgemäß verwendeten Sensor aber auch um eine digitale Kamera handeln, die insbesondere mittels eines CCD-Sensors eine Bildinformation eines Bereichs der industriellen Anlage generiert. Es liegt ebenfalls im Rahmen der Erfindung, eine Kombination mehrerer Sensoren, beispielsweise mehrerer digitaler Kameras, zu verwenden, um zusätzliche Informationen beispielsweise bezüglich einer räumlichen Tiefe der Anlage zu erhalten. Vorteilhafterweise sind die Sensoren dabei in einer festen räumlichen Beziehung zueinander angeordnet.

Der zuvor erläuterte Verfahrensschritt kann händisch erfolgen, indem der Sensor von Hand durch die Anlage bewegt wird. Der angesprochene Verfahrensschritt kann aber zumindest teilweise automatisiert werden, beispielsweise mittels einer sich autonom fortbewegenden Vorrichtung, auf welcher der Sensor angeordnet ist.

Der zweite Verfahrensschritt wird voll automatisiert durchgeführt und sieht eine automatische Identifizierung von Komponenten der industriellen Anlage vor. Hierzu werden die im ersten Verfahrensschritt ermittelten optischen Informationen verwendet. Zur Identifizierung der Komponenten können an sich bereits bekannte Verfahren zur Erkennung von Objekten eingesetzt werden. Wichtig ist dabei jedoch, dass ein entsprechender Algorithmus in der Lage ist, unter den vergleichsweise rauen Bedingungen einer industriellen Anlage (Schmutz, Wärme, Staub etc.) zuverlässige Identifizierungsresultate zu liefern.

Im darauffolgenden Schritt des erfindungsgemäßen Verfahrens wird automatisiert eine Konfigurationsdokumentation erstellt, die die zuvor ermittelten bzw. identifizierten Komponenten umfasst, und die es einer einen Automatisierungs- oder Elektrifizierungsvorgang durchführenden Fachkraft erlaubt, eine detaillierte, aktuelle Übersicht über die industrielle Anlage zu erhalten.

Bei einer besonders vorteilhaften Weiterbildung des erfindungsgemäßen Verfahrens werden neben den eigentlichen Komponenten als Ganzes Typenschilder der Komponenten der industriellen Anlage optisch erfasst. Mithilfe der Erfassung und anschließenden Identifizierung von auf den Typenschildern hinterlegten Spezifikationsdaten der Komponenten können relevante zusätzliche Informationen über die Komponenten gewonnen werden, die unter Umständen aus einer reinen Erfassung der Komponenten als Ganzes nicht ermittelt werden können.

Die Auswertung der Typenschilder kann beispielsweise mittels an sich bekannter Verfahren wie einem Texterkennungsalgorithmus bzw. einer optischen Zeichenerkennung (OCR - optical character recognition) erfolgen.

Vorteilhafterweise werden alternativ oder zusätzlich zu der Erfassung und Auswertung der Typenschilder auch Verbindungselemente zwischen den einzelnen Komponenten der industriellen Anlage optisch erfasst. Hierbei kann es sich beispielsweise um Rohrleitungen oder sonstige verfahrenstechnische Verbindungen handeln. Durch die optische Erfassung der Verbindungselemente können Verbindungen zwischen den einzelnen Komponenten der industriellen Anlage automatisch identifiziert und in die Konfigurationsdokumentation integriert werden.

Bei einer besonders vorteilhaften Weiterbildung des Verfahrens werden ein Standort und/oder eine Ausrichtung des Sensors bezüglich der industriellen Anlage variiert. Mit anderen Worten es wird eine Orientierung des Sensors im Raum variiert, sodass der Sensor aus verschiedenen Raumrichtungen auf die einzelnen Komponenten und/oder Verbindungselemente der industriellen Anlage blickt bzw. diese erfasst. Durch die Aufnahme der Komponenten und/oder Verbindungselemente aus verschiedenen Perspektiven kann die anschließende Identifizierung der Komponenten und/oder Verbindungselemente speziell bei komplexeren Strukturen deutlich erleichtert bzw. überhaupt ermöglicht werden.

Vorteilhafterweise wird mittels des Sensors eine Sequenz von Einzelaufnahmen der industriellen Anlage erzeugt. Durch die sequentielle Aufnahme einer Vielzahl von Einzelbildern lassen sich insbesondere größere Komponenten und/oder Verbindungen über mehrere Aufnahmen hinweg verfolgen. Vorzugsweise wird nach im Wesentlichen jeder Einzelaufnahme eine Variation des Standorts und/oder der Ausrichtung des Sensors durchgeführt. Dadurch lässt sich eine mehr oder weniger übergangslose Aufnahme der industriellen Anlage vornehmen.

Bei einer vorteilhaften Weiterbildung des erfindungsgemäßen Verfahrens werden nach erfolgter automatischer Identifizierung von Komponenten und/oder Verbindungen der industriellen Anlage manuell zusätzliche Komponenten und/oder Verbindungen identifiziert und in die Konfigurationsdokumentation integriert. Gerade bei komplexeren Anlagen ist es möglich, dass nicht alle Komponenten und/oder Verbindungen automatisch identifiziert werden können. Beispielsweise können in der Anlage Rohrleitungen installiert sein, die von außen nicht sichtbar sind, weil sie beispielsweise von einer Isolierung verdeckt werden. Für diese Fälle ist es vorteilhaft, wenn eine händische Integration zusätzlicher Komponenten und/oder Verbindungen in die Anlagendokumentation möglich ist.

Vorteilhafterweise wird das Verfahren zur Erfassung einer Konfiguration einer industriellen Anlage durchgeführt, die bereits eine bestehende Anlagendokumentation aufweist. Die mittels des Verfahrens erzeugte Konfigurationsdokumentation wird dabei mit einer bestehenden Anlagendokumentation verglichen, um die bestehende Anlagendokumentation auf einen aktuellen Stand zu bringen. Grundsätzlich eignet sich das erfindungsgemäße Verfahren sowohl für die Aufnahme neuer industrieller Anlagen (Greenfield) als auch für bestehende Anlagen (Brownfield). Bei letzterem werden die Vorteile des Verfahrens jedoch besonders stark sichtbar. So kann die bestehende Anlagendokumentation auf einfacher Art und Weise nahezu vollautomatisch auf den neuesten Stand gebracht werden, ohne übermäßig zeitliche und finanzielle Ressourcen zu verbrauchen.

Bei einer Anwendung des Verfahrens im Rahmen der Aufnahme einer bestehenden Anlage ist es vorteilhaft, wenn die bestehende Anlagendokumentation vor dem Vergleich mit der mittels des erfindungsgemäßen Verfahrens neu erzeugte Konfigurationsdokumentation digital erfasst wird. Dadurch können die alte und neue Konfigurationsdokumentation einfacher miteinander abgeglichen werden.

Im Rahmen einer besonders vorteilhaften Weiterbildung des Erfassungsverfahrens wird im Rahmen der Erstellung der Konfigurationsdokumentation ein Rohrleitungs- und Instrumentenfließschema erzeugt.

Dabei kann ein digital erfasstes Rohrleitungs- und Instrumentenfließschema der bestehenden Anlagendokumentation einer bestehenden Anlage als Basis für das neu erzeugte Rohrleitungs- und Instrumentenfließschema verwendet werden. Dies hat den Vorteil, dass das als Basis verwendete Rohrleitungs- und Instrumentenfließschema in der Regel gut zu dem Typ der industriellen Anlage passt und dadurch einfacher zu verstehen ist.

Gerade im Fall der Aufnahme einer neuen Anlage kann aber auch als Basis für das neu erzeugte Rohrleitungs- und Instrumentenfließschema eine Standarddatenbank verwendet werden. In der Standarddatenbank sind Rohrleitungs- und Instrumentenfließschemata verschiedener Anlagentypen hinterlegt. Um sicherzustellen, dass das erzeugte R&I-Schema bestimmten Anforderungen hinsichtlich optischer Gestaltung und Lesbarkeit erfüllt, werden im Rahmen des dementsprechend weitergebildeten Verfahrens mittels eines Algorithmus die identifizierten Komponenten und/oder Verbindungen mit den in der Standarddatenbank hinterlegten R&I-Schemata verglichen, um das am besten passende R&I-Basisschema zu identifizieren, welches als Grundlage für das erzeugte R&I-Schema verwendet wird.

Die zuvor erläuterte Aufgabe wird gleichfalls gelöst durch ein Dokumentationssystem zur Erfassung einer technischen Konfiguration einer industriellen Anlage, insbesondere Fertigungs- oder Produktionsanlage, gemäß Anspruch 12.

Ein solches Dokumentationssystem weist einen zur Erfassung von optischen Informationen ausgebildeten und vorgesehenen Sensor zur Erfassung wenigstens einer Teilmenge von Komponenten der industriellen Anlage, vorzugsweise im Wesentlichen aller Komponenten der industriellen Anlage, auf. Bei diesem Sensor kann es sich, ohne sich darauf zu beschränken, um eine digitale Kamera handeln. Es ist auch möglich, mehrere Sensoren zu verwenden, um zusätzliche Informationen über Abstände und Dimensionen innerhalb der industriellen Anlage zu erhalten.

Zudem weist das Dokumentationssystem eine Verarbeitungseinheit zur automatischen Identifizierung von Komponenten und/oder Verbindungen der industriellen Anlage mittels zuvor von dem System erfasster Informationen auf. Die Verarbeitungseinheit kann einen Mikroprozessor oder dergleichen aufweisen, der dazu ausgebildet ist, eine digitale Verarbeitung der zuvor erhaltenen optischen Informationen durchzuführen.

Darüber hinaus weist das Dokumentationssystem eine Weiterverarbeitungseinheit zur Erzeugung einer Konfigurationsdokumentation auf, die die zuvor identifizierten Komponenten und/oder Verbindungen der industriellen Anlage umfasst. Auch die Weiterverarbeitungseinheit kann einen Mikroprozessor oder dergleichen aufweisen.

Außerdem weist das Dokumentationssystem eine Ausgabeeinheit zur Ausgabe der Konfigurationsdokumentation auf.

Die Weiterverarbeitungseinheit umfasst vorteilhafterweise eine Erzeugungseinheit zur Erzeugung eines Rohrleitungs- und Instrumentenfließschemas. Dabei kann die Weiterverarbeitungseinheit eine Schnittstelle zum Einbeziehen von bestehenden Anlagendokumentationen der industriellen Anlage, vorzugsweise von Rohrleitungs- und Instrumentenfließschemata, aufweisen.

Im Rahmen einer besonders vorteilhaften Weiterbildung weist die Weiterverarbeitungseinheit eine Schnittstelle auf, um in einer Datenbank bezüglich der Komponenten und/oder Verbindungen hinterlegte Informationen in die Weiterverarbeitung der zuvor automatisch identifizierten Komponenten und/oder Verbindungen der industriellen Anlage miteinzubeziehen.

Entsprechend der zuvor erläuterten Weiterbildung des erfindungsgemäßen Verfahrens ist der Sensor auf einer Vorrichtung angeordnet, die zu einer autonomen Fortbewegung ausgebildet und vorgesehen ist. Dadurch lässt sich der Sensor auf einfache Art und Weise durch die industrielle Anlage bewegt werden, um eine vollständige Aufnahme mittels des Dokumentationssystems zu ermöglichen.

Bevorzugt wird das Dokumentationssystem im Rahmen des erfindungsgemäßen Verfahrens verwendet.

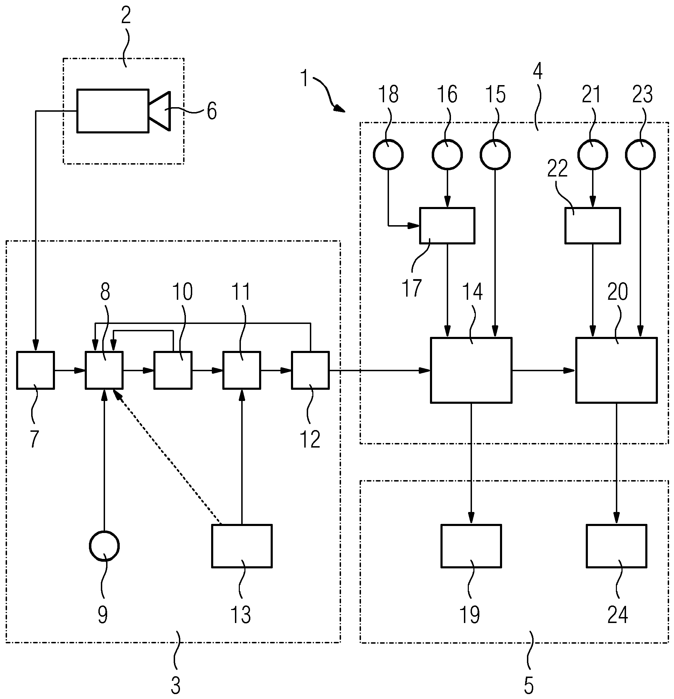

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Es zeigt:
- FIG: ein Ablaufschema eines erfindungsgemäßen Verfahrens und eine Struktur eines dazugehörigen Dokumentationssystems.

In der Figur ist ein erfindungsgemäßes Dokumentationssystem 1 gezeigt, das einen Sensor 2 zur Erfassung von optischen Informationen, eine Verarbeitungseinheit 3, eine Weiterverarbeitungseinheit 4 und eine Ausgabeeinheit 5 aufweist. Das Dokumentationssystem 1 wird im Rahmen eines im Folgenden näher erläuterten erfindungsgemäßen Verfahrens verwendet.

Bei dem Sensor 2 handelt sich um eine digitale Kamera 6, mit deren Hilfe eine bestehende industrielle Anlage (nicht dargestellt) optisch erfasst wird. Die digitale Kamera 6 erzeugt eine sequentielle Folge von digitalen Einzelaufnahmen in Form eines Videos. Zur Erhöhung der Informationsdichte wird die digitale Kamera 6 beim Durchlaufen der industriellen Anlage regelmäßig in verschiedene Richtungen geschwenkt, um einen möglichst umfassenden Überblick über die Anlage zu erhalten. Die digitale Kamera 6 erfasst dabei insbesondere Typenschilder von Komponenten der Anlage. Das Bewegen der digitalen Kamera 6 kann dabei händisch oder mittels einer geeigneten Vorrichtung, beispielsweise eines Roboters, erfolgen.

Die Bildinformationen werden von der digitalen Kamera 6 an die Verarbeitungseinheit 3 übertragen. Dort wird das Video zunächst mittels eines Video Splitters 7 in eine Sequenz von Einzelbildern aufgeteilt. Dabei werden mittels eines in dem Videosplitter 7 enthaltenen Algorithmus aufeinanderfolgende Bilder hinsichtlich möglicher Bildveränderungen untersucht. Nur wenn der Algorithmus eine Bildveränderung identifiziert, werden beide aufeinanderfolgende Bilder zur weiteren Bearbeitung gespeichert. Erkennt der Algorithmus keine Bildänderung, so wird das zeitlich spätere Bild nicht weiter berücksichtigt. Hierdurch lässt sich die Datenmenge reduzieren, die für die weitere Bearbeitung berücksichtigt werden muss. Gegebenenfalls können Schwellwerte oder Parameterbedingungen für den Algorithmus von einem Anwender des Verfahrens justiert werden, um auf spezielle Rahmenbedingungen bei der Aufnahme der industriellen Anlage eingehen zu können.

In einem nächsten Schritt werden im Rahmen einer Typidentifikation 8 die in einem Bild vorhandenen Objekte identifiziert und einem bestimmten Typ einer Anlagenkomponente zugewiesen. Hierzu wird, falls möglich, eine Schriftzeichenerkennung von auf Objekten/Komponenten angebrachten Schriftzeichen, beispielsweise einem aufgedruckten Herstellernamen, vorgenommen.

Falls eindeutige Schriftzeichen nicht zur Verfügung stehen oder nicht lesbar sind oder nicht ausreichende Informationen zur Verfügung stellen können, greift die Verarbeitungseinheit 3 auf eine Datenbank 9 zu, in der Bilder verschiedener Komponententypen wie Pumpen, Behälter, Motoren, Messgeräte und dgl. hinterlegt sind. Durch einen Abgleich der Bildinformationen wird dabei ermittelt, um welchen Typ einer Anlagenkomponente es sich handelt. Dabei können verschiedene Stufen der Typidentifikation erreicht werden:
- Spezifische Identifikation: Die Komponente wird eindeutig mit ihren spezifischen Informationen identifiziert. Beispielsweise wird ein Messumformer als SITRANS® P der Siemens AG erkannt.
- Basisidentifikation: Der Typ einer Komponente wird zwar erkannt, die spezifische Ausprägung der Komponente allerdings nicht. Beispielsweise wird erkannt, dass es sich um einen Motor handelt. Informationen wie der Hersteller des Motors sind nicht bekannt.
- Keine Identifikation: Der Komponententyp kann nicht ermittelt werden.

Es können auch Mischformen zwischen der spezifischen Identifikation und der Basisidentifikation auftreten. Beispielsweise kann der Hersteller eines Motors zwar erkannt worden sein, das exakte Modell des Motors allerdings nicht.

Enthält das auszuwertende Bild ein Typenschild, das auch als solches von dem Auswertungsalgorithmus erkannt worden ist, werden mittels eines Texterkennungsalgorithmus (OCR - optical character recognition) die entsprechenden Informationen ausgelesen und der Komponente, an welcher das Typenschild angebracht ist, zugeordnet. Hierbei spricht man von einer Parameterzuordnung 10. Im Rahmen dieses Schrittes können auch Barcodes und/oder QR-Codes ausgewertet werden, mit deren Hilfe gegebenenfalls zusätzliche Informationen, beispielsweise aus über das Internet zugänglichen Herstellerdatenbanken, ermittelt werden können. Die Parameterzuordnung 10 kann somit Einfluss auf die zuvor bereits erfolgte Typenidentifikation 8 haben. Beispielsweise können die zusätzlichen Informationen dazu führen, dass eine Basisidentifikation einer Komponente in eine vollständige Identifikation übergeht.

Im nächsten Schritt werden im Rahmen einer Verbindungsidentifikation 11 die einzelnen Verbindungen zwischen den Komponenten graphisch identifiziert. Dabei kann es sich beispielsweise um Rohrleitungen handeln, die an Anlagenkomponenten wie Pumpen oder Behältern angeschlossen sind.

Im darauffolgenden Verfolgungsschritt 12 wird das zeitlich folgende Bild betrachtet. Dabei werden bereits erkannte Objekte weiterverfolgt, d.h. es wird sichergestellt, dass ein bestimmtes Objekt im folgenden Bild wieder als dasselbe Bild erkannt wird. Dabei ist von Bedeutung, dass in dem Videosplitter 7 eine ausreichend engmaschige Sequenz von Einzelbildern zur Weiterverarbeitung erzeugt wird, so dass nicht fälschlicherweise dieselbe Komponente als eine Mehrzahl von Komponenten desselben Typs erkannt werden.

In zeitlich folgenden Bildern werden die zuvor erläuterten Schritte wiederholt durchgeführt, bis die Sequenz von Einzelbildern durchlaufen worden ist.

Ein manuelles Eingreifen 13 eines Anwenders des Verfahrens ist im Rahmen der Schritte Typidentifikation 8 und Verbindungsidentifikation 11 möglich. Aus unterschiedlichen Gründen, beispielsweise Verschmutzungen oder ein Verbergen von Komponenten durch Isolierungen, kann eine Zuordnung zu einem Komponententyp oder eine Herstellung einer Verbindung nicht möglich sein. Der Anwender des Verfahrens bzw. der Benutzer des Dokumentationssystems 1 kann dann eine händische Typenzuordnung oder eine Verbindungsherstellung vornehmen. Das händische Hinzufügen von Informationen kann dabei auch nach Abschluss des gesamten Erfassungsverfahrens erfolgen, hier müssen dann nur gegebenenfalls die nachfolgenden Schritte erneut durchgeführt werden, um die resultierende Anlagendokumentation auf den neuesten Stand zu bringen.

In der Weiterverarbeitungseinheit 4 wird zunächst mittels eines R&I-Generators 14 ein Rohrleitungs- und Instrumentenfließschema (R&I-Schema) erzeugt. Im Falle eines Neubaus einer Anlage ordnet der R&I-Generator 14 die identifizierten Komponenten und Verbindungen in einem Schema an und erstellt die Querverbindungen. Zur Sicherstellung einer ausreichenden optischen Gestaltung und Lesbarkeit des Schemas greift der R&I-Generator auf eine Standarddatenbank 15 zu, die Informationen über standardmäßige R&I-Schemas samt dazugehörigen industriellen Anlagen enthält. In dem R&I-Generator ist ein Algorithmus enthalten, der das sich aus der Bildanalyse ergebende Schema der Anlage mit in der Standarddatenbank 15 hinterlegten Strukturen vergleicht und das passende R&I-Layout auswählt.

Im Falle einer Aufnahme einer bestehenden Anlage muss ein vorhandenes altes R&I-Schema 16 mittels eines Interpretieralgorithmus 17 in eine zur digitalen Verarbeitung passende Form gebracht werden. Hierzu greift der Interpretieralgorithmus 17 auf eine Bausteinbibliothek 18 zu, in welcher eine Vielzahl an Komponenten und Verbindungen hinterlegt ist. In dem R&I-Generator 14 werden anschließend die Informationen des bestehenden R&I-Schemas 16 und der neu erfassten Komponenten/Verbindungen miteinander abgeglichen und ein aktualisiertes R&I-Schema 19 an die Ausgabeeinheit 5 übertragen.

In einem letzten Schritt werden im Rahmen eines Datenabgleichs 20 die aus der Identifikation von Typenschildern ermittelten Parameter im Falle einer bestehenden Anlage mit bereits vorhandenen Altparametern 21, die entsprechend mittels einer Importfunktion 22 in die Weiterverarbeitungseinheit 4 importiert wurden, abgeglichen. Speziell im Falle einer neuen Anlage können auch zusätzlich Parameter aus einer speziellen Produktdatenbank 23 eingelesen werden. Die aktualisierten Parameter 24 werden anschließend an die Ausgabeeinheit 5 übertragen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Erfassung einer technischen Konfiguration einer industriellen Anlage, insbesondere Fertigungs- oder Produktionsanlage, umfassend:
a) Optische Erfassung wenigstens einer Teilmenge von Komponenten der industriellen Anlage, vorzugsweise im Wesentlichen aller Komponenten der industriellen Anlage, mittels eines zur Erfassung von optischen Informationen ausgebildeten und vorgesehenen Sensors (2), vorzugsweise mittels einer Digitalkamera (6);
b) Verwendung der zuvor erfassten optischen Informationen zur automatischen Identifizierung von Komponenten der industriellen Anlage;
c) Automatische Erstellung einer Konfigurationsdokumentation (19, 24), die die zuvor identifizierten Komponenten der industriellen Anlage umfasst.

2. Verfahren nach Anspruch 1, bei dem Typenschilder von Komponenten der industriellen Anlage optisch erfasst werden, um Spezifikationsdaten der Komponenten automatisch zu identifizieren und in die Konfigurationsdokumentation zu integrieren.

3. Verfahren nach Anspruch 1 oder 2, bei dem Verbindungselemente zwischen den einzelnen Komponenten der industriellen Anlage optisch erfasst werden, um Verbindungen zwischen den Komponenten automatisch zu identifizieren (11) und in die Konfigurationsdokumentation (19, 24) zu integrieren.

4. Verfahren nach einem der vorangegangenen Ansprüche, bei dem ein Standort und/oder eine Ausrichtung des Sensors (2) bezüglich der industriellen Anlage variiert wird, um die Komponenten und/oder Verbindungselemente der industriellen Anlage aus sich voneinander unterscheidenden Blickrichtungen optisch zu erfassen.

5. Verfahren nach einem der vorangegangenen Ansprüche, bei dem mittels des Sensors eine Sequenz von Einzelaufnahmen der industriellen Anlage erzeugt wird, wobei vorzugsweise nach im Wesentlichen jeder Einzelaufnahme eine Variation des Standorts und/oder der Ausrichtung des Sensors (2) gemäß Anspruch 4 durchgeführt wird.

6. Verfahren nach einem der vorangegangenen Ansprüche, bei dem nach erfolgter automatischer Identifizierung von Komponenten (8, 10) und/oder Verbindungen (11) der industriellen Anlage manuell zusätzliche Komponenten und/oder Verbindungen identifiziert und in die Konfigurationsdokumentation (19, 24) integriert werden.

7. Verfahren nach einem der vorangegangenen Ansprüche, das zur Erfassung einer Konfiguration einer industriellen Anlage durchgeführt wird, die bereits eine bestehende Anlagendokumentation (16, 21) aufweist, wobei die mittels des Verfahrens gemäß einem der Ansprüche 1 bis 6 erzeugte Konfigurationsdokumentation (19, 24) mit der bestehenden Anlagendokumentation (16, 21) verglichen wird, um die bestehende Anlagendokumentation (16, 21) auf einen aktuellen Stand zu bringen.

8. Verfahren nach Anspruch 7, bei dem die bestehende Anlagendokumentation (16, 21) vor dem Vergleich mit der mittels des Verfahrens gemäß einem der Ansprüche 1 bis 6 erzeugten Konfigurationsdokumentation (19, 24) digital erfasst wird.

9. Verfahren nach einem der vorangegangenen Ansprüche, bei dem im Rahmen der Erstellung der Konfigurationsdokumentation (19, 24) ein Rohrleitungs- und Instrumentenfließschema (19) erzeugt wird.

10. Verfahren nach den Ansprüchen 8 und 9, bei dem ein gemäß dem Anspruch 8 digital erfasstes Rohrleitungs- und Instrumentenfließschema (16) der bestehenden Anlagendokumentation als Basis für das neu erzeugte Rohrleitungsund Instrumentenfließschema (19) verwendet wird.

11. Verfahren nach Anspruch 9, bei dem als Basis für das neu erzeugte Rohrleitungs- und Instrumentenfließschema (19) eine Standarddatenbank (15) verwendet wird.

12. Dokumentationssystem (1) zur Erfassung einer technischen Konfiguration einer industriellen Anlage, insbesondere Fertigungs- oder Produktionsanlage, aufweisend einen zur Erfassung von optischen Informationen ausgebildeten und vorgesehenen Sensor (2) zur Erfassung wenigstens einer Teilmenge von Komponenten der industriellen Anlage, vorzugsweise im Wesentlichen aller Komponenten der industriellen Anlage,
eine Verarbeitungseinheit (3) zur automatischen Identifizierung von Komponenten (8, 10) und/oder Verbindungen (11) der industriellen Anlage mittels zuvor von dem System erfasster Informationen,
eine Weiterverarbeitungseinheit (4) zur Erzeugung einer Konfigurationsdokumentation 19, 24), die die zuvor identifizierten Komponenten und/oder Verbindungen der industriellen Anlage umfasst,
und eine Ausgabeeinheit (5) zur Ausgabe der Konfigurationsdokumentation (19, 24).

13. Dokumentationssystem (1) nach Anspruch 12, bei dem die Weiterverarbeitungseinheit (4) eine Erzeugungseinheit (14) zur Erzeugung eines Rohrleitungs- und Instrumentenfließschemas (19) umfasst.

14. Dokumentationssystem (1) nach Anspruch 12 oder 13, bei dem die Weiterverarbeitungseinheit (4) eine Schnittstelle zum Einbeziehen von bestehenden Anlagendokumentationen (16, 21) der industriellen Anlage, vorzugsweise von Rohrleitungs- und Instrumentenfließschemata (16), aufweist.

15. Dokumentationssystem (1) nach Anspruch 12 oder 13, bei dem die Weiterverarbeitungseinheit eine Schnittstelle aufweist, um in einer Datenbank bezüglich der Komponenten und/oder Verbindungen hinterlegte Informationen in die Weiterverarbeitung der zuvor automatisch identifizierten Komponenten und/oder Verbindungen der industriellen Anlage miteinzubeziehen.

16. Dokumentationssystem nach einem der Ansprüche 12 bis 15, bei dem der Sensor (2) auf einer Vorrichtung angeordnet ist, die zu einer autonomen Fortbewegung ausgebildet und vorgesehen ist.

17. Verwendung des Dokumentationssystems (1) gemäß einem der Ansprüche 12 bis 16 im Rahmen des Verfahrens zur Erfassung einer technischen Konfiguration einer industriellen Anlage gemäß einem der Ansprüche 1 bis 11.
